# EUROPÄISCHE PATENTSCHRIFT

(11) **EP 0 356 927 B1**
(45) Veröffentlichungstag und Bekanntmachung des Hinweises auf die Patenterteilung: **23.06.1993**
(21) Anmeldenummer: 89115697.8
(22) Anmeldetag: 25.08.1989
(51) Int. Cl.: B23Q 5/40

(54) **Vorschubantrieb für Planschlitten von Werkzeugmaschinen**
Feed drive for a machine tool slide
Entraînement d'avance pour le chariot d'une machine outil

(30) Priorität: 29.08.1988 DE 3829185
(43) Veröffentlichungstag der Anmeldung: 07.03.1990
(73) Patentinhaber: Gildemeister AG, D-33689 Bielefeld (DE)
(72) Erfinder: Schalles, Erhardt, D-4800 Bielefeld 18 (DE)

(56) Entgegenhaltungen:
- DE-A- 3 528 901
- FR-A- 1 590 397
- FR-A- 2 314 004
- US-A- 3 919 810
- US-A- 4 741 221

## Beschreibung

Die Erfindung betrifft einen Planschlittenvorschubantrieb einer Drehmaschine, wobei der Planschlitten auf Führungen eines Basisteils verschieblich ist, mit einer am Basisteil parallel zu den Führungen gelagerten Gewindespindel, einer am Schlitten befestigten Spindelmutter und einem parallel zur Gewindespindel angeordneten Motor mit rotierender Motorwelle und mit einem Rotationswegmeßsystem, wobei ein auf der Motorwelle befestigtes Abtriebsrad und ein auf der Gewindespindel befestigtes Antriebsrad, das unmittelbar oder über einen Zahnriementrieb mit dem Abtriebsrad verbunden ist, einen Getriebezug bilden.

Aus Werkstatt und Betrieb 110 (1977), Heft 9, Seiten 555 bis 559, ist ein derartiger Vorschubantrieb bekannt, bei dem der Vorschubmotor unterhalb des Planschlittens angeordnet ist und die Gewindespindel über einen Zahnriemen angetrieben wird. Dadurch wird die Baulänge des Vorschubantriebes gering gehalten. Es muß allerdings in Achsrichtung des Vorschubmotors ein Montageraum freigelassen werden, um den Vorschubmotor gegenüber der Gewindespindel justieren zu können. Gemäß Seite 558, linke Spalte, ist die Gewindespindel des Planschlittens an dem der Drehmitte näheren Ende in einem Festlager abgestützt, um den Einfluß des Wärmewachstums der Vorschubspindel klein zu halten. Dabei wird die Erkenntnis genutzt, daß bei kleinen Werkstückabmessungen bei gleicher Qualität die absoluten Maßabweichungen geringer sein müssen als bei großen Abmessungen. Der Antrieb wirkt auf das gegenüberliegende, freie Ende der Gewindespindel, das in einem Loslager abgestützt werden muß.

Die bekannte Konstruktion berücksichtigt nicht, daß die Genauigkeit der Bearbeitung nicht nur von der Wärmedehnung der Bauteile, sondern auch von der Steifigkeit des Vorschubantriebs abhängt. Die torsionsbelastete Länge der Gewindespindel ist aber bei der Bearbeitung kleiner Werkstückdurchmesser besonders groß. Dieser Fehler läßt sich durch eine Überdimensionierung der im Kraftfluß liegenden Bauteile nicht kompensieren, wenn der Antrieb wegen der Platzverhältnisse, z.B. bei einer Vielschlittendrehmaschine, besonders kompakt bauen muß.

Der Erfindung liegt die Aufgabe zugrunde, einen kompakt bauenden Vorschubantrieb so zu gestalten, daß der Antrieb besonders steif ist.

Die Erfindung wird durch die Merkmale des Hauptanspruchs gelöst.

Durch die Anordnung des Antriebsrades ist die aktive Länge der Gewindespindel kurz. Die torsionsbelastete Länge verkürzt sich weiter mit der Bearbeitung kleinerer Werkstückdurchmesser. Ein zweites Lager am freien Ende der Gewindespindel kann entfallen. Die Anordnung des Motors macht einen besonderen Freiraum für seine Montage entbehrlich.

Der Verzicht auf eine zweite Lagerstelle, auf den zusätzlichen Montageraum und die Anordnung einer Distanzhülse für die Spindelmutter, die in das Basisteil hineinragt, trägt zur Verkleinerung des für den Vorschubantrieb benötigten Raumes bei.

Die Montage der Vorschubspindel wird vereinfacht, wenn das Antriebsrad und das Wälzlager der Gewindespindel nebeneinander auf dem gleichen Lagerzapfen vorgesehen sind. Die Zahnradnabe dient dann als Anlageschulter für das Wälzlager. Eine einfache Konstruktion ergibt sich auch dadurch, daß der Antriebsmotor direkt an das Basisteil angeflanscht werden kann. Da das Abtriebsrad auf der Motorwelle befestigt sein soll, muß die Anschraubfläche im Basisteil unmittelbar an den Getriebezug angrenzen.

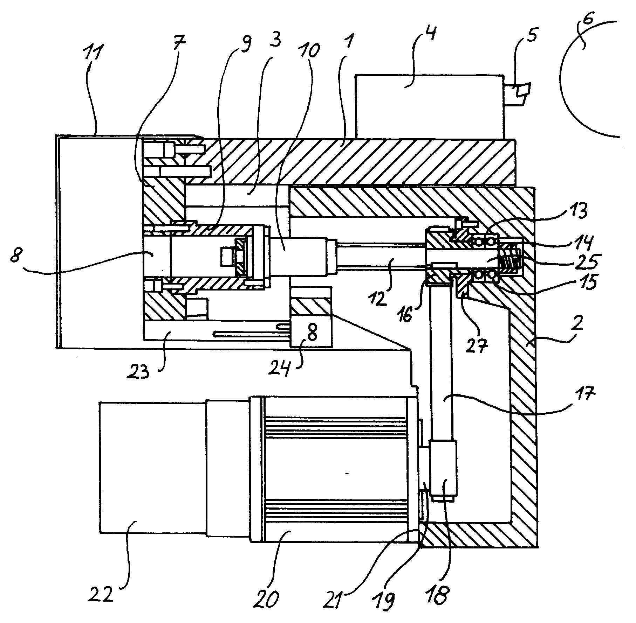

Die Erfindung wird anhand der nachfolgenden Zeichnung näher erläutert. Die Zeichnung zeigt einen Schnitt durch eine Planschlitteneinheit.

Der Planschlitten 1 ist auf einem Basisteil 2, z.B. einer Schlittenkonsole, gelagert. An seiner Unterseite trägt er Gegenführungen 3, die in Führungsbahnen des Basisteils 2 gleiten. Auf seiner Oberseite sind Werkzeughalter 4 mit Werkzeugen 5 zur Bearbeitung von Werkstücken 6 befestigt. An einer Schmalseite des Planschlittens 1 ist eine Druckplatte 7 angeschraubt, die eine Bohrung 8 aufweist. Koaxial zur Bohrung 8 ist an der Druckplatte 7 eine Distanzhülse 9 befestigt, die an ihrem freien Ende die Spindelmutter 10 trägt. Auf diese Weise erstreckt sich die Spindelmutter 10 in das Basisteil 2 hinein. Die Spindelmutter 10 ist undrehbar, aber gemeinsam mit dem Planschlitten 1 axialverschieblich. Die Bohrung 8 wird durch eine Abdeckung 11 geschützt. Die Axialbewegung der Spindelmutter 10 wird durch eine Gewindespindel 12 bewirkt, die mit einem Festlager in der Lagerstelle 13 des Basisteils 2 drehbar gehalten wird.

Als Festlager werden Wälzlager 14 benutzt, die durch eine Wellenmutter 15 gegen einen Bund des Antriebsrades 16 gespannt werden. Dadurch erhalten die Wälzlager 14 eine sichere Lage auf der Gewindespindel 12 und für das Antriebsrad 16 und die Wälzlager 14 wird nur ein gemeinsamer Lagerzapfen 25 mit einem durchgehenden Passitz benötigt. Die Wälzlager 14 sind mit einem Deckel 27 im Basisteil 2 gehalten. Das Antriebsrad 16 ist auf der Gewindespindel 12 zusätzlich gegen Verdrehung gesichert und wird durch den Zahnriemen 17 angetrieben. Der Zahnriemen 17 umschlingt das Abtriebsrad 18, das auf der Motorwelle 19 des Elektromotors 20 angeordnet ist. Der Motor 20 ist an einer zurückspringenden Anschraubfläche 21 des Basisteils 2 befestigt und mit einem Rotationswegmeßsystem 22 verbunden. Die Endlagen der Schlittenvorschubbewegung werden durch Nocken, die an der Nockenleiste 23 einstellbar befestigt sind, und Endschalter 24 überwacht. Als Antrieb für die Gewindespindel 12 kommen alle Arten rotatorischer Motoren in Betracht.

## Patentansprüche

1. Drehmaschine mit einem auf Führungen eines Basisteils (2) verschieblichen Planschlitten (1) mit einem numerisch gesteuerten Vorschubantrieb, mit einer am Basisteil (2) parallel zu den Führungen gelagerten Gewindespindel (12), einer am Schlitten (1) befestigten Spindelmutter (10) und einem parallel zur Gewindespindel (12) angeordneten Motor (20) mit rotierender Motorwelle (19) und mit einem Rotationswegmeßsystem (22), wobei ein auf der Motorwelle (19) befestigtes Abtriebsrad (18) und ein auf der Gewindespindel (12) befestigtes Antriebsrad (16), das unmittelbar oder über einen Zahnriementrieb (17) mit dem Abtriebsrad (18) verbunden ist, einen Getriebezug bilden,
dadurch gekennzeichnet, daß das Antriebsrad (16) zwischen der werkstückseitigen Lagerstelle (13) der Gewindespindel (12) und der Spindelmutter (10) und in der Nähe der werkstückseitigen Lagerstelle (13) angeordnet ist, daß der Getriebezug von dem Basisteil (2) aufgenommen wird und zwischen der Spindelmutter (10) und dem Planschlitten (1) eine Distanzhülse (9) angeordnet ist, die die Gewindespindel (12) während der Verschiebung des Planschlittens (1) aufnimmt, wobei die Distanzhülse (9) in das Basisteil (2) hineinragt.

2. Drehmaschine nach Anspruch 1, dadurch gekennzeichnet, daß der Lagerzapfen (25) der Gewindespindel (12) der werkstückseitigen Lagerstelle (13) das Antriebsrad (16) und das Wälzlager (14) der Lagerstelle (13) derart aufnimmt, daß das Lager (14) sich gegen das Antriebsrad (16) abstützt.

3. Drehmaschine nach Anspruch 1, dadurch gekennzeichnet, daß das den Getriebezug aufnehmende Basisteil (2) im Bereich des Antriebsmotors (20) eine bis zum Getriebezug zurückweichende Anschraubfläche (21) aufweist.

## Claims

1. A lathe having a cross slide (1) displaceable on guides of a base member (2), with a numerically controlled feed drive, a screwthreaded spindle (12) which is mounted on the base member (2) parallel to the guides, a spindle nut (10) feed to the slide (1), and a motor (20) arranged parallel to the screwthreaded spindle (12), with a rotating motor shaft (19) and a rotational travel measuring system (22), wherein an output wheel (18) feed on the motor shaft (19) and a drive wheel (16) which is fixed on the screwthreaded spindle (12) and which is connected to the output wheel (18) directly or by way of a toothed belt drive (17) form a transmission train, characterised in that the drive wheel (16) is arranged between the workpiece-side mounting location (13) of the screwthreaded spindle (12) and the spindle nut (10) and in the vicinity of the workpiece-side mounting location (13), that the transmission train is accommodated by the base member (2) and disposed between the spindle nut (10) and the cross slide (1) is a spacer sleeve (9) which accommodates the screwthreaded spindle (12) during the displacement of the cross slide (1), the spacer sleeve (9) projecting into the base member (2).

2. A lathe according to claim 1 characterised in that the mounting trunnion (25) of the screwthreaded spindle (12) of the workpiece-side mounting location (13) carries the drive wheel (16) and the rolling bearing (14) of the mounting location (13) in such a way that the bearing (14) bears against the drive wheel (16).

3. A lathe according to claim 1 characterised in that the base member (2) which accommodates the transmission train is provided in the region of the drive motor (20) with a screw mounting surface (21) which extends back to the transmission train.

## Revendications

1. Machine-outil de tournage avec un coulisseau transversal (1) déplaçable sur des guidages d'une partie de base (2), avec un entraînement d'avance à commande numérique, équipé d'une tige filetée (12) montée tournante sur la partie de base (2), parallèlement au guidage, d'un écrou associé à la tige filetée (10) fixé sur le coulisseau (1) et d'un moteur (20) à arbre tournant (19), disposé parallèlement à la tige filetée (12) et avec un système de mesure de déplacement angulaire (22), dans laquelle une roue d'entraînement (18) fixée sur l'arbre moteur (19) et une roue d'entraînement (16) fixée sur la tige filetée (12) et reliée à la roue d'entraînement (18), directement ou par l'intermédiaire d'une transmission à courroie crantée (17), forment un train de transmission, caractérisée en ce que la roue d'entraînement (16) est disposée entre le point de palier (13) situé du côté "pièce usinée" de la tige filetée (12) et l'écrou (10) et à proximité du point de palier (13) situé du côté "pièce usinée", en ce que le train de transmission est supporté par la partie de base (2) et en ce qu'entre l'écrou (10) et le coulisseau transversal (1) est disposée une douille entretoise (9), supportant la tige filetée (12) pendant le déplacement du coulisseau transversal (1), la douille entretoise (9) pénétrant dans la partie de base (2).

2. Machine-outil de tournage selon la revendication 1, caractérisée en ce que le tourillon de palier (25) de la broche filetée (12) du point de palier (13) situé du côté "pièce usinée" supporte la roue d'entraînement (16) et le palier à roulement (14) du point de palier (13), de telle façon que le palier (14) prenne appui contre la roue d'entraînement (16).

3. machine-outil de tournage selon la revendication 1, caractérisée en ce que la partie de base (2) supportant le train d'entraînement présente, dans la zone du moteur d'entraînement (20), une surface de montage par vissage (21), formant un retour jusque vers le train de transmission.
